# EUROPÄISCHE PATENTSCHRIFT

(11) **EP 2 181 583 B1**
(45) Veröffentlichungstag und Bekanntmachung des Hinweises auf die Patenterteilung: **04.07.2012**
(21) Anmeldenummer: 09013522.9
(22) Anmeldetag: 27.10.2009
(51) Int. Cl.: A01K 1/00

(54) **Verfahren und Vorrichtung zum Be- und Entlüften**
Device and method for venting or removing air
Procédé et dispositif d'aération

(30) Priorität: 28.10.2008 DE 102008053440
(43) Veröffentlichungstag der Anmeldung: 05.05.2010
(73) Patentinhaber: Krause, Karl-Heinz, 31224 Peine (DE)
(72) Erfinder: Krause, Karl-Heinz, 31224 Peine (DE); Müßlick, Michael, 99880 Waltershausen (DE)
(74) Vertreter: Pott, Ulrich

(56) Entgegenhaltungen:
- WO-A2-2007/002700
- US-A- 3 951 336

## Beschreibung

Die Erfindung bezieht sich auf ein Verfahren zum Be- und Entlüften von einen Oberflurbereich und einen Unterflurbereich aufweisenden Gebäuden, insbesondere von Stalleinrichtungen, bei denen sich im Unterflurbereich ein Güllekeller befindet, bei dem über eine Frischluftzuführung Frischluft dem Gebäudeinneren zugeführt und die im Gebäudeinneren umgewälzte Gebäudeluft über eine Absaugvorrichtung aus dem Gebäude abgeführt und der Umgebungsluft zugeführt wird, wobei die dem Gebäudeinneren zugeführte Frischluft in einen Oberflurluftstrom und einen Unterflurluftstrom aufgeteilt wird.

Darüber hinaus bezieht sich die Erfindung auf eine Vorrichtung zum Be- und Entlüften in einer Ausgestaltung gemäß dem Oberbegriff des Patentanspruches 13.

Von Stalleinrichtungen und dergleichen ausgehende Geruchsbelastungen und Ammoniakeinträge als sogenannte Emissionen machen sich im Umfeld von auf engstem Raum stattfindender Tierhaltung bemerkbar. Bei der Belüftung von solchen Stalleinrichtungen kann es zum Verblasen von Staub und Keimen kommen. Luftinhaltsstoffe des Gebäudes werden über ihre Konzentration mit dem Volumenstrom aus dem Stall fortgetragen. Dies gilt gleichermaßen für frei gelüftete Stallsysteme wie auch für solche, die mit einer Zwangslüftung über Ventilatoren betrieben werden.

Herkömmlicherweise wird bei einer Zwangslüftung über Ventilatoren die gesamte in der Stalleinrichtung umgewälzte Luft Filtern zugeführt. Dazu sind entsprechende Filtereinrichtungen vorzuhalten, die nicht nur ein entsprechendes Investitionsvolumen zur Installation erfordern, sondern auch laufende Unterhaltskosten verursachen, die dadurch bedingt sind, dass entsprechende Filter nach einer bestimmten Einsatzzeit auszutauschen sind. Dies ist maßgeblich dadurch bestimmt, dass ein erheblicher Luftvolumenstrom zu filtern ist.

Aus der DE 296 14 928 U1 ist eine Belüftungsanlage für einen Stall mit mindestens einem Radialventilator zur Frischluftzufuhr in den Stall und mindestens einem Axialventilator zur Abluftabsaugung aus dem Stall bekannt, wobei über Steuereinrichtungen die Förderleistungen der Ventilatoren nach Maßgabe von in dem Stall vorgesehenen Meßwertgebern so regelbar sind, dass sich bei ausreichender Luftwechselrate im Stall eine innerhalb eines vorbestimmten Temperaturbereiches liegende Solltemperatur einstellt. Bei der vorgenannten Belüftungsanlage gelangt über die Radialventilatoren Frischluft radial verteilt in den Stall. Über die Axialventilatoren erfolgt ein Absaugen der Stallluft, wobei die Absaugebenen unterschiedlich hoch im Stall angeordnet sein können. Es sind solche in Deckennähe und solche in Bodennähe vorgesehen, wobei die Unterflurabsaugung durch einen auf den Spaltboden aufgesetzten Schacht erfolgt. Die Luft wird dabei vertikal abgesaugt. Dabei treten Punktquellen der Zuführung bei den Radialventilatoren auf und Punktsenken bei den Axialventilatoren auf. Hierdurch ist das Durchströmen des Stallraumes aufgrund des Zuström- und Abströmverhaltens von Punktquellen und Punktsenken durch zum Teil gegenläufige Strömungen geprägt und wenig geeignet, ein einheitliches Strömungsbild zu liefern, um gezielt Sensoren zur Temperatur- und Druckerfassung zu installieren. Dieses ist außerordentlich nachteilig, da damit das in diesem Stand der Technik angestrebte Ziel, ein optimales Stallklima mit ausreichender Luftwechselrate und Konstanthaltung der Stalltemperatur in aller Regel nicht zu erreichen ist.

Aus der US 3,951,336 A ist ein Verfahren der eingangs genannten Art bekannt. Dabei wird die dem Gebäudeinneren zugeführte Frischluft in einem Oberflurluftstrom und einem Unterflurluftstrom aufgeteilt, jedoch wiederum über Einzelventilatoren abgeführt, bei denen wiederum Punktquellen auftauchen. Damit ist ein optimales Stallklima mit ausreichender Luftwechselrate und Konstanthaltung der Stalltemperatur nicht zu erreichen.

Es ist Aufgabe der vorliegenden Erfindung, ein Verfahren und eine Vorrichtung zum Be- und Entlüften zur Verfügung zu stellen, bei der unter Einsparung zumindest eines Teils der üblicherweise anfallenden Unterhaltungskosten gleichwohl die Geruchsbelastung auch außerhalb des Gebäudes gering zu halten sind, wobei allerdings die durch die DIN 18910 festgelegten Volumenströme in Stalleinrichtungen eingehal-ten werden können. Darüber hinaus soll die Stallkonzentration an Ammoniak mög-lichst gering gehalten werden.

Diese Aufgabe wird bei einem Verfahren zum Be- und Entlüften von Gebänden durch die Merkmale des Patentanspruches 1 gelöst. Eine Verrichtung zum Be- und Entlüften von Gebänden, die insbesondere auch das Verfahren nach Patentanspruch 1 umsetzen kann, in Patentanspruch 13 angegeben. Danach geht die Erfindung zunächst von der grundsätzlichen Erkenntnis aus, dass eine Änderung der Quellenkonzentration, also eine Konzentration an der Quelle, von der die größte Geruchsbelastung ausgeht, die wirkungsvollste und nachhaltigste Maßnahme zur Emissions- und damit Immissionsminderung darstellt. Danach wird durch einen erzeugten oberflächenparallelen Unterflurvolumenstrom zunächst sichergestellt, dass die Gefahr eines Stoffübergang von Ammoniak und Geruchsstoffen von z.B. einem Güllekeller in den Oberflurbereich und damit beispielsweise in einen Innenraum einer Stalleinrichtung erheblich vermindert ist. Diese Luft, die im Unterflurbereich strömt, wird einem Filter zugeführt, wobei das Besondere an dem erfindungsgemäßen Verfahren darin besteht, dass die unter den Spaltenboden abgesaugte Unterflurluft nur einen Teil der Luftmenge ausmacht, die insgesamt aus tierphysiologischen Gründen die Luftwechselrate im Stall bestimmt. Danach wird in bestimmten Jahreszeiten nur dieser Teil der gesamten umwälzbaren Luft abgesaugt und dem Filter zugeführt. Dieses erspart wegen des reduzierten Filterbedarfs Investitions- und Unterhaltskosten.

Bei dem erfindungsgemäßen Verfahren treten keine Punktquellen wie bei Radialventilatoren und keine Punktsenken wie bei Axialventilatoren, die absaugen, auf. Aus diesem Grund sind in konsequenter Weise schlitzförmige Kanäle vorgesehen, und zwar im Zuluftbereich als auch im Abluftbereich, wodurch sich ein breites und durch den gesamten Stallraum gleichmäßig wirkendes Strömungsfeld aufbaut, in dem dann Sensoren gezielt eingesetzt werden können, um Temperatur- und Drucksteuerungen zu realisieren. Dadurch, dass ein oberflächenparalleles Absaugen der Luft aus dem Raum oberhalb der Gülle und unterhalb von Spaltenböden erfolgt, ist auch dort ein Strömungsfeld zu realisieren, dass gleichmäßig zwischen dem Stall oberhalb des Spaltenbodens und der Gülle wirkt. Ein solches oberflächenparalleles Absaugen erfolgt das ganze Jahr über mit einer Lüftungsrate, die den Luftbedarf der Tiere für den Winter und eine Übergangszeit abdeckt. Frischluft strömt über den erwähnten Zuluftkanal mit langgezogenem Schlitz in den Stallraum nach. Die Unterflur abgesogene Luft wird einem Filter zugeführt, der dazu dient, Ammoniak abzuscheiden und nicht in die Umwelt gelangen zu lassen.

Dabei kann die Lüftungsrate, die unterhalb des Spaltenbodens abgesaugt wird, so ausgelegt werden, dass sie nicht nur den Lüftungsbedarf für den Winterbetrieb abdeckt, sondern auch noch einen Teil darüber hinaus. Beim Winterbetrieb läuft die Lüftungsrate nach DIN 18910 auf ca. 30 % der maximalen Lüftungsrate im Sommerbetrieb. Die Jahreslüftungsrate insgesamt beläuft sich näherungsweise auf 47 % der Lüftungsrate im Sommerbetrieb. In der Winterzeit wird die Luft komplett über die Filteranlage gefahren, so dass die Umweltbelastung insgesamt verschwindend gering ist. Der oberhalb des Spaltenbodens anfallende Anteil an Kontaminationen, der bei Anwendung dieses Systems erheblich reduziert ist, wird während der Sommerzeit ungefiltert in die Umwelt abgegeben.

Durch das Einbringen von Linienquellen (Einlasskanäle) mit langgezogenen Schlitzen für das Ansaugen von Frischluft von außen oder aus vorkonditionierten Räumlichkeiten unterhalb einer Raumdecke oder an den Seitenwänden und das Einbringen von Liniensenken (Auslasskanäle) mit langgezogenen Schlitzen für das Absaugen der Raumluft (unterhalb der Stalldecke oder den Seitenwänden) können einfache Strömungsfelder von den Einlassschlitzen zu Auslassschlitzen aufgebaut werden. Über die gesamte Raumbreite bzw. -länge, je nach dem, wie eine Ausrichtung des Raumes ist, beispielsweise eine Ausrichtung von Haltungsboxen in einen Stall, sind vergleichmäßigt die Geschwindigkeitsfelder des Trägermediums Luft mit seinen Inhaltsstoffen zu gewährleisten. Damit ist ein kontrolliertes Strömungsfeld innerhalb des Raumes zu erzeugen, wobei dieses durch Auswahl, Lokalisierung und Dimensionierung der Zuluft- und Ablufteinrichtungen zu optimieren ist. Durch die Aufteilung in den Unterflurstrom mit separater Absaugung und in den Oberflurluftstrom mit separater Absaugung ist z.B. in einer Stalleinrichtung mit unterhalb eines Spaltenbodens vorgesehenen Güllekeller die Luftströmung so umzusetzen, dass Ammoniak in der Gülle verbleibt und nicht in den Stallraum gesogen wird. Somit ist dann auch ein Oberflurluftstrom z.B. in den Sommermonaten nicht mehr über den Filter zu fahren, ohne dass angrenzende Bereiche einer derartigen Stalleinrichtung belastet werden.

Bei einer Lüftungsrate, die nur bis zu 30% des Gesamtvolumenstroms in den Sommermonaten ausmacht, weshalb von der partiellen Unterflurabsaugung gesprochen wird, kann ein Minderungsgrad an Ammoniak in der Größenordnung von 60% und mehr erreicht werden. Der relativ hoch belastete Unterflurvolumenstrom wird jedoch gefiltert, nicht jedoch der Gesamtvolumenstrom, was sich wiederum positiv auswirkt. In der Winter- und Übergangszeit wird aufgrund der Filterung der Unterflurabsaugung kaum Ammoniak und Geruch freigesetzt. Mitbestimmend ist der Wirkungsgrad des eingesetzten Wäschers als Filterelement. Bei Zuschaltung der Oberflurabsaugung ist ein Eindringen von Ammoniak in den Stallraum nur möglich, wenn das oberhalb des Spaltenbodens erzeugte Strömungsfeld in die Nähe des Spaltenbodens kommt oder aber das bei der Unterflurabsaugung erzeugte Strömungsfeld ein wenig in den bodennahen Teil des Stallraums oberhalb des Spaltenbodens schwappt. Die beiden Strömungen, die durch die Oberflurabsaugung und die Unterflurabsaugung entstehen, arbeiten gegeneinander. Die Unterflurabsagung wirkt ähnlich wie eine Grenzschichtabsaugung und soll verhindern, dass die Oberflurabsaugung in den Spaltenbodenbereich eintaucht und Ammoniak und Gericht nach oben in den Stallraum zieht. Damit wird dem Tierschutz und letztendlich auch dem Umweltschutz Rechnung getragen.

Weitere vorteilhafte Ausgestaltungen des erfindungsgemäßen Verfahrens ergeben sich aus den Ansprüchen 2 bis 12 Ausgestaltungen der Vorrichtung sind in den Ansprüchen 14 bis 20 angegeben. Weitere Ausgestaltungen und Vorteile ergeben sich auch aus der nachfolgenden Beschreibung und der Zeichnung. In der Zeichnung zeigen:
- Fig. 1 a): Schaubild einer Oberflurabsaugung über einen Filter,
- b): Schaubild einer Unterflurabsaugung über einen Filter,
- c): Schaubild einer aufgeteilten Unter- und Oberflurabsaugung gemäß dem Verfahren nach der Erfindung;
- Fig. 2: ein Ausführungsbeispiel eines Stallraumes mit einer Unterflurluftab- saugung gleichgerichtet zur Oberflurluftabsaugung;
- Fig. 3: eine zu Fig. 2 analoge Darstellung mit einer Unterflurluftabsaugung im Gegenstrom zur Oberflurluftabsaugung, und
- Fig. 4: schematisch einen Querschnitt durch ein Ausführungsbeispiel einer Vorrichtung nach der Erfindung.

In der Zeichnung sind grundsätzlich gleichwirkende Teile mit übereinstimmenden Bezugsziffern versehen. Die nachfolgende Beschreibung erfolgt an einer zu belüftenden Stalleinrichtung. Das Verfahren und die Vorrichtung nach der Erfindung sind jedoch nicht auf Stalleinrichtungen beschränkt, sondern lässt sich auch bei anderen Gebäuden wirkungsvoll einsetzen.

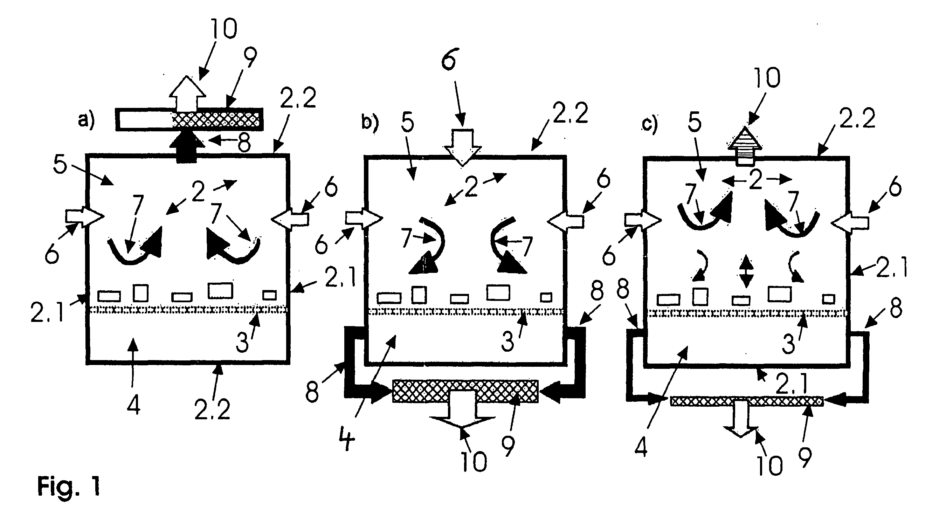

Die Stalleinrichtung 1 hat einen Raum 2 mit Seitenwänden 2.1 und Stirnwänden 2.2 sowie einen Spaltenboden 3, auf dem z.B. Mastschweine stehen. Dadurch teilt sich der Raum auf in einen Unterflurbereich 4 und einen Oberflurbereich 5. In dem Spaltenboden 3 sind durch die Spalte Luftdurchtrittsräume geschaffen. Die Fig. 1a) zeigt ein Ausführungsbeispiel herkömmlicher Bauart, bei dem Frischluft 6 in das Rauminnere 2 eingebracht, und die belastete Raumluft 7 als Abluft 8 einem Filter 9 zugeführt wird. Als gereinigte Luft 10 wird sie dann in die Umgebung abgeführt. Dazu sind kostenintensive Filtereinrichtungen 9 vorzuhalten.

Fig. 1 b) zeigt ein Ausführungsbeispiel, bei dem die zugeführte Frischluft 6 sowohl an der Stirnwand 2.2 als auch an den Seitenwänden 2.1 zugeführt wird. Die Raumluft 7 wird durch den Spaltboden 3 in den Unterflurbereich 4 geführt, in dem z.B. die Gülle steht, und als Abluft 8 wiederum dem Filter 9 zugeführt, von dem sie als gereinigte Luft 10 in die Umgebung abgegeben wird.

Fig. 1 c) zeigt ein Ausführungsbeispiel gemäß der Erfindung, wo die zugeführte Frischluft 6 dem Rauminneren 2 zugeführt wird, und zwar im Bereich des Oberflurbereiches 5. Durch den Spaltenboden 3 gelangt diese Luft in den Unterflurbereich 4 und wird dort oberhalb der Gülle geführt hin zu einem Unterflurauslass, von wo diese Abluft 8 dem Filter 9 zugeführt wird. Diese Luft verlässt dann als gereinigte Luft 10 den Filter 9. Die durch den Unterflurluftstrom von Emissionen weitgehend freigehaltene Raumluft 7 im Oberflurbereich 5 kann direkt als nicht belastete Luft in die Umgebung abgegeben werden.

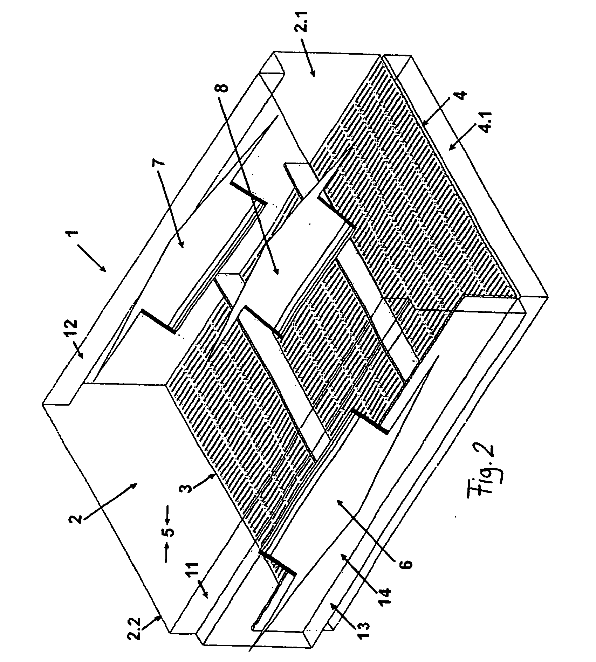

In Fig. 2 ist das Ausführungsbeispiel anhand einer weiteren Stalleinrichtung beschrieben. Diese Stalleinrichtung 2 hat wiederum Seitenwände 2.1 und Stirnwände 2.2, wobei zwischen den Seitenwänden 2.1 oberhalb des Spaltenbodens 3 der Oberflurbereich 5 gelegen ist. Die Tiere befinden sich auf dem Spaltenboden 3. Unterhalb des Spaltenbodens 3 ist der Unterflurbereich mit dem Güllekeller 4.1 gelegen. Der Güllekeller 4.1 hat eine Höhe in Bezug auf die Unterkante des Spaltenbodens 3. Während der Mast sorgen die Kot- und Harnabgaben der Tiere dafür, dass die Gülle im Keller 4.1 ansteigt, so dass der Füllstand mit der Zeit ansteigt. Der Luftraum des Unterflurbereiches 4 zwischen der Unterkante des Spaltenbodens 3 und der Gülleoberfläche verkleinert sich daher, wobei oberhalb der Gülleoberfläche für die Unterflurluftströmung ein Raum verbleibt. Ab einem bestimmten Füllstand wird das Abpumpen der Gülle eingeleitet. Die Absaugung unter Flur erfolgt über langgezogene Schlitze, die in Kanäle in den Unterflurbereich 4 integriert sind. Vielfach erfolgt eine Aneinanderreihung von einzelnen Klappenelementen, da sich ein durchgehender Schlitz konstruktiv in der Praxis vielfach nicht umsetzen lässt. Über den Zuluftkanal 11 an der Decke des Stalls wird Frischluft zugeführt, die über diesen Kanal in den Stallraum 2 gelangt. Bei 12 ist ein Abluftkanal vorgesehen, über den die Luft 7 des Oberflurbereiches abgesaugt wird. Die Absaugvorrichtung für diese Abluft 7 ist nicht näher dargestellt. Die von dem Frischluftkanal 11 kommende Frischluft 6 wird in einen zentralen Futtergang 13 mit Längsbuchten 14 eingeführt. Auf den Boden dieses Futterganges 13 prallt die Luft und reflektiert in den Stallraum 2 (in der Draufsicht auf die Fig. 2 nach rechts). Links neben dem gezeigten Stallraum 2 kann sich ein benachbarter Stallraum anschließen.

Aufgrund der Zwangsabsaugung im Abluftkanal 12 werden Strömungskräfte erzeugt, die dafür sorgen, dass die Frischluft über den Zuluftkanal 11 durch den Stallraum 2 (Oberflurbereich 5) und den Luftraum oberhalb der Gülle im Güllekeller geführt wird, wobei für die Führung oberhalb der Gülle die im einzelnen auch nicht dargestellte Absaugvorrichtung für den Unterflurluftstrom Sorge trägt.

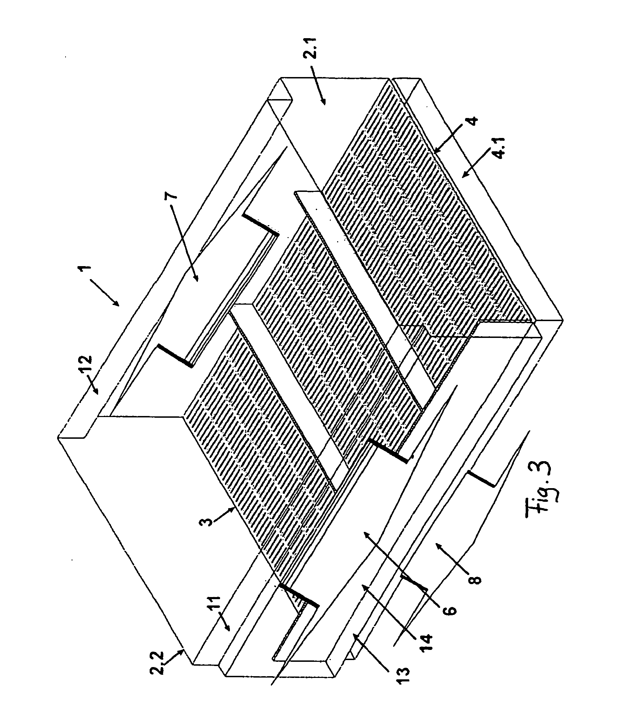

Bei ansonsten identischem Aufbau ist in Fig. 2 ein Lüftungsprinzip oberhalb und unterhalb des Spaltenbodens gezeigt, wobei der Unterflurluftstrom 8, der der Filtereinrichtung zugeführt wird, gleichgerichtet ist zu dem Luftstrom 7 der Oberflurabsaugung, wohingegen der Unterflurluftstrom 8 im Ausführungsbeispiel nach Fig. 3 entgegen den Luftstrom geführt ist zum Absaugen des Oberflurluftstroms.

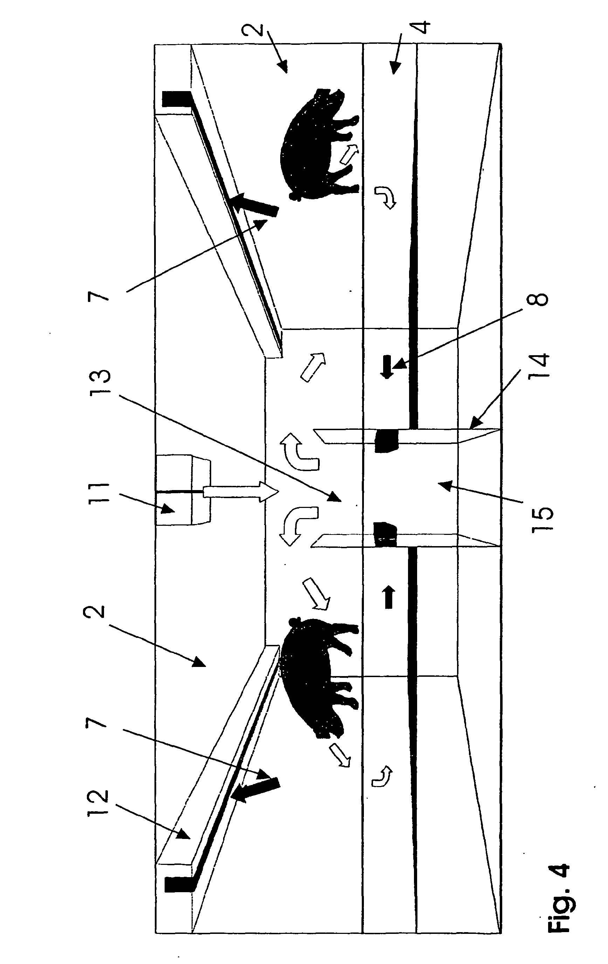

Die Darstellung nach Fig. 4 verdeutlicht noch einmal, dass die Frischluft 6 aus dem Frischluftkanal 11 in den zentralen Futterbereich 13 eingebracht werden kann mit den Längsbuchten 14. Der Unterflurluftstrom 8 wird einem zentralen Kanal 15 zugeführt und dort an eine Filtereinrichtung (nicht gezeigt) weitergegeben. Der Oberflurluftstrom 7 wird im Abluftkanal 12 an der Decke des Gebäudes zugeführt. Der Frischluftstrom prallt auf das Bodenblech des zentralen Futterganges 13 und reflektiert von dort aus in die jeweiligen Stallräume 2.

## Patentansprüche

1. Verfahren zum Be- und Entlüften von einen Oberflurbereich (5) und einen Unterflurbereich (4) aufweisenden Gebäuden, insbesondere von Stalleinrichtungen, bei denen sich im Unterflurbereich (4) ein Güllekeller (4.1) befindet, bei dem über eine Frischluftzuführung Frischluft (6) dem Gebäudeinneren (2) zugeführt und die im Gebäudeinneren (2) umgewälzte Gebäudeluft über eine Absaugvorrichtung aus dem Gebäude abgeführt und der Umgebungsluft zugeführt wird, wobei die dem Gebäudeinneren (2) zugeführte Frischluft (6) in einem Oberflurluftstrom (7) und einem Unterflurluftstrom (8) aufgeteilt wird, **dadurch** gekennzeich-net, dass der Oberflurluftstrom (7) einerseits über eine partielle schlitzförmige langgezogene Oberflurluftabsaugung und der Unterflurluftstrom (8) andererseits über eine partielle parallel zur Oberfläche der Gülle im Güllekeller (4.1) ausgerichtete schlitzförmige, langgezogene Unterflurluftabsaugung aus dem Gebäudeinneren abgeführt werden.

2. Verfahren nach Anspruch 1, **dadurch gekennzeichnet, dass** steuerbar die über die Oberflurabsaugung und die über die Unterflurabsaugung abgeführten Luftströme (7, 8) einer Filtereinrichtung (9) zugeführt werden.

3. Verfahren nach Anspruch 1 oder 2, **dadurch gekennzeichnet, dass** der über die Unterflurabsaugung abgeführte Luftstrom (8) ständig der Filtereinrichtung (9) zuge-führt wird.

4. Verfahren nach einem der Ansprüche 1 bis 3, **dadurch gekennzeichnet, dass** die Unterflurabsaugung des Unterflurluftstromes (8) im Gegenstrom zur Oberflurab-saugung erfolgt.

5. Verfahren nach einem der Ansprüche 1 bis 3, **dadurch gekennzeichnet, dass** die Unterflurabsaugung des Unterflurluftstromes (8) im Gleichstrom zur Oberflurab-saugung des Oberflurluftstromes (7) erfolgt.

6. Verfahren nach einem der Ansprüche 1 bis 5, **dadurch gekennzeichnet, dass** steuerbar in Abhängigkeit vorgebbarer Betriebsparameter, beispielsweise in Abhän-gigkeit eines Sommerbetriebs oder Winterbetriebs, der gesamte Oberflurluftstrom (7) der Filtereinrichtung (9) zuführbar ist.

7. Verfahren nach Anspruch 6, **dadurch gekennzeichnet, dass** bei Zuführung des Oberluftstromes (7) der Filtereinrichtung (9) die Oberflurluftabsaugung über die Un-terflurluftabsaugung erfolgt.

8. Verfahren nach einem der Ansprüche 1 bis 7, **dadurch gekennzeichnet, dass** die Frischluftzufuhr (6) im Gebäudeinneren (2) über einen langgezogenen Kanal (11) an der Decke eines Gebäuderaumes erfolgt.

9. Verfahren nach einem der Ansprüche 1 bis 8, **dadurch gekennzeichnet, dass** die Absaugung des Oberflurluftstromes (7) an der Decke eines Gebäuderaumes des Gebäudes erfolgt.

10. Verfahren nach einem der Ansprüche 1 bis 9, **dadurch gekennzeichnet, dass** die Frischluftzufuhr (6), die Unterflurabsaugung und/oder die Oberflurabsaugung über jeweils eine Zuführung bzw. eine Abführung erfolgt, die sich zumindest im we-sentlichen über eine Längs- und/oder Quererstreckung eines Gebäuderaumes er-streckt.

11. Verfahren nach einem der Ansprüche 1 bis 10, **dadurch gekennzeichnet, dass** die Frischluftzufuhr (6) zentral in einem Gebäuderaum des Gebäudes erfolgt im Be-reich eines Luftverteilers, von dem Frischluftströme in beidseits des Zentralbereiches gelegene Lufträume des Raumes des Gebäudes gelangen.

12. Verfahren nach einem der Ansprüche 1 bis 11, **dadurch gekennzeichnet, dass** die Luftzufuhr des Unterflurbereiches (4) vom Oberflurbereich (5) und die Unterflur-absaugung in einem Zentralbereich des Gebäuderaumes erfolgt.

13. Vorrichtung zum Be- und Entlüften von einen Oberflurbereich (5) und einen Unterflurbereich (4) aufweisenden Gebäuden, insbesondere von Stalleinrichtungen, bei denen sich im Unterflurbereich (4) ein Güllekeller (4.1) befindet, mit einer insbesondere im Deckenbereich eines Gebäuderaumes (2) angeordneten Frischluftzufuhr (6) und zumindest einer Absaugvorrichtung, wobei zwischen dem Oberflurbereich (4) und dem Unterflurbereich (5) ein Spaltenboden vorgesehen ist, insbesondere zur Durchführung des Verfahrens nach einem der Ansprüche 1 bis 13, wobei die zugeführte Frischluft über einen schlitzförmigen langen Zuluftkanal erfolgt, **dadurch** gekenn-zeichnet, dass die zugeführte Frischluft über einen schlitzförmigen langen Zuluftka-nal erfolgt, das jeweils eine Absaugvorrichtung mit langgezogenen Schlitzen für ei-nen Oberflurluftstrom und eine Absaugvorrichtung für einen Unterflurluftstrom mit Luftstromschlitzen für ein oberflächenparalleles Absaugen der Luft aus dem Raum oberhalb der Gülle vorgesehen sind.

14. Vorrichtung nach Anspruch 13, **dadurch gekennzeichnet, dass** die Vorrichtung zur Unterflurluftabsaugung mit einer Filtereinrichtung verbindbar ist.

15. Vorrichtung nach Anspruch 14, **dadurch gekennzeichnet, dass** die Vorrichtung zur Oberflurluftabsaugung über eine Steuer- oder Schaltvorrichtung mit der Filterein-richtung verbindbar ist.

16. Vorrichtung nach einem der Ansprüche 13 bis 15, **dadurch gekennzeichnet, dass** die Vorrichtung zur Unterflurluftabsaugung langgezogene Luftstromschlitze aufweist.

17. Vorrichtung nach einem der Ansprüche 13 bis 16, **dadurch gekennzeichnet, dass** die Frischluftzufuhr (6) einen Zuluftkanal (11) aufweist, der im Deckenbereich eines Gebäuderaumes (2) montiert ist und die Frischluft (6) zentral von oben dem Gebäudeinneren zuführt.

18. Vorrichtung nach einem der Ansprüche 13 bis 17, **dadurch gekennzeichnet, dass** die Luftzufuhr in den Unterflurbereich (5) über den Spaltboden (3) erfolgt.

19. Vorrichtung nach einem der Ansprüche 13 bis 18, **dadurch gekennzeichnet, dass** der Frischluftzufuhr (6) einem Prallkanal im Bodenbereich des Raumes zuführbar ist, von wo der Frischluftstrom in andere Gebäuderaumbereiche reflektiert.

20. Vorrichtung nach einem der Ansprüche 13 bis 19, **dadurch gekennzeichnet, dass** die Vorrichtung zur Absaugung eines Oberflurluftstromes im Deckenbereich eines Gebäudes vorgesehen ist.

21. Vorrichtung nach einem der Ansprüche 13 bis 20, **dadurch gekennzeichnet, dass** sich die Vorrichtungen zur Absaugung des Oberflurluftstromes und zur Abführung des Unterluftstromes mit ihren Schlitzen längs eines Gebäuderaumes erstre-cken.

## Claims

1. Method of supplying air to and removing air from buildings which have an above-floor region (5) and a below-floor region (4), and in particular to and from animal housing facilities in which there is a manure pit (4.1) in the below-floor region (4), in which method fresh air (6) is fed into the interior (2) of the building by means of a system for feeding in fresh air and the building-air which has circulated in the interior (2) of the building is fed out of the building and fed into the ambient air by means of an extractor arrangement, the fresh air (6) which is fed into the interior (2) of the building being divided into an above-floor airflow (7) and a below-floor airflow (8), **characterised in that** on the one hand the above-floor airflow (7) is fed out from the interior of the building by means of a partial, slotted, elongated above-floor air extraction system and on the other hand the below-floor airflow (8) is fed out from the interior of the building by means of a partial, slotted, elongated below-floor air extraction system which is oriented parallel to the surface of the manure in the manure pit (4.1).

2. Method according to claim 1, **characterised in that** the airflows (7, 8) fed out by means of the above-floor extraction system and below-floor extraction system are fed to a filter means (9) in a controllable manner.

3. Method according to claim 1 or 2, **characterised in that** the airflow (8) fed out by means of the below-floor extraction system is fed to the filter means (9) continuously.

4. Method according to one of claims 1 to 3, **characterised in that** the below-floor extraction of the below-floor airflow (8) takes place in counter-current to the above-floor extraction.

5. Method according to one of claims 1 to 3, **characterised in that** the below-floor extraction of the below-floor airflow (8) takes place in co-current to the above-floor extraction of the above-floor airflow (7).

6. Method according to one of claims 1 to 5, **characterised in that** the whole of the above-floor airflow (7) can be fed to the filter means (9) in a controllable manner as a function of presettable operating parameters, such as, for example, as a function of a summer mode or a winter mode.

7. Method according to claim 6, **characterised in that** when the above-floor airflow (7) is fed to the filter means (9), the above-floor extraction of air takes place via the below-floor extraction system.

8. Method according to one of claims 1 to 7, **characterised in that** the infeed of fresh air (6) to the interior (2) of the building takes place through an elongated duct (11) on the ceiling of a space in the building.

9. Method according to one of claims 1 to 8, **characterised in that** the extraction of the above-floor airflow (7) takes place at the ceiling of a space in the building.

10. Method according to one of claims 1 to 9, **characterised in that** the infeed of fresh air (6), the below-floor extraction and/or the above-floor extraction are respectively performed by an infeed and an outfeed system which extend at least substantially over a longitudinal and/or transverse extent of a space in the building.

11. Method according to one of claims 1 to 10, **characterised in that** the infeed of fresh air (6) takes place centrally in a space in the building, in the region of an air distributor from which flows of fresh air make their way into air-spaces in the space in the building which are situated on both sides of the central region.

12. Method according to one of claims 1 to 11, **characterised in that** the infeed of air to the below-floor region (4) takes place from the above-floor region (5) and the below-floor extraction takes place in a central region of the space in the building.

13. Arrangement for supplying air to and removing air from buildings which have an above-floor region (5) and a below-floor region (4), and in particular to and from animal housing facilities in which there is a manure pit (4.1) in the below-floor region (4), having a system for feeding in fresh air (6) which is arranged in particular in the region of the ceiling of a space (2) in the building and having at least one extractor arrangement, a slatted floor being provided between the above-floor region (4) and the below-floor region (5), the arrangement being in particular for carrying out the method according to one of claims 1 to 13, the infeed of fresh air taking place through a long, slotted infeed duct, **characterised in that** the infeed of fresh air takes place through a long, slotted duct for incoming air, so that there are provided an extractor arrangement having elongated slots for an above-floor airflow and an extractor arrangement, for a below-floor airflow, which has airflow slots for extraction of the air from the space above the manure parallel to the surface of thereof.

14. Arrangement according to claim 13, **characterised in that** the arrangement for below-floor air extraction can be connected to a filter means.

15. Arrangement according to claim 14, **characterised in that** the arrangement for above-floor air extraction can be connected to the filter means via a control or switching arrangement.

16. Arrangement according to one of claims 13 to 15, **characterised in that** the arrangement for below-floor air extraction has elongated airflow slots.

17. Arrangement according to one of claims 13 to 16, **characterised in that** the system for feeding in fresh air (6) has a duct (11) for incoming air which is mounted in the region of the ceiling of a space (2) in the building and which feeds the fresh air (6) into the interior of the building centrally from above.

18. Arrangement according to one of claims 13 to 17, **characterised in that** the infeed of air into the below-floor region (5) takes place through the slatted floor (3).

19. Arrangement according to one of claims 13 to 18, **characterised in that** the infeed of fresh air (6) can be fed to a deflector passage in the region of the floor of the space, from where the flow of fresh air is diverted back into other regions of the space in the building.

20. Arrangement according to one of claims 13 to 19, **characterised in that** the arrangement for extracting an above-floor airflow is provided in the region of the ceiling of a building.

21. Arrangement according to one of claims 13 to 20, **characterised in that** the slots of the arrangements for extracting the above-floor airflow and for feeding out the below-floor airflow extend longitudinally of a space in the building.

## Revendications

1. Procédé d'aération de bâtiments présentant une zone de couloir supérieur (5) et une zone de couloir inférieur (4), en particulier d'aménagements d'écurie, pour lesquels une cave à lisier (4.1) se trouve dans la zone de couloir inférieur (4.1), dans laquelle de l'air frais (6) est introduit à l'intérieur du bâtiment par une amenée d'air frais et l'air du bâtiment brassé à l'intérieur du bâtiment (2) est évacué par un dispositif d'aspiration hors du bâtiment et est amené à l'air ambiant, sachant que l'air frais (6) introduit à l'intérieur du bâtiment (2) est réparti en un courant d'air de couloir supérieur (7) et un courant d'air de couloir inférieur (8), **caractérisé en ce que** le courant d'air de couloir supérieur (7) d'une part est évacué par une aspiration d'air de couloir supérieur partielle, étirée en longueur, en forme de fente et le courant d'air de couloir inférieur (8) d'autre part est évacué par une aspiration d'air de couloir inférieur partielle, étirée en longueur, en forme de fente, orientée parallèlement à la surface du lisier dans la cave à lisier (4.1) de l'intérieur du bâtiment.

2. Procédé selon la revendication 1, **caractérisé en ce que** les courants d'air (7, 8) évacués par l'aspiration de couloir supérieur et évacués par l'aspiration de couloir inférieur sont amenés de manière dirigeable à un dispositif de filtration (9).

3. Procédé selon la revendication 1 ou 2, **caractérisé en ce que** le courant d'air (8) évacué par l'aspiration de couloir inférieur est amené en permanence au dispositif de filtration (9).

4. Procédé selon l'une quelconque des revendications 1 à 3, **caractérisé en ce que** l'aspiration de couloir inférieur du courant d'air de couloir inférieur (8) est effectuée à contrecourant par rapport à l'aspiration de couloir supérieur.

5. Procédé selon l'une quelconque des revendications 1 à 3, **caractérisé en ce que** l'aspiration de couloir inférieur du courant d'air de couloir inférieur (8) est effectuée dans le même sens par rapport à l'aspiration de couloir supérieur du courant d'air de couloir supérieur (7).

6. Procédé selon l'une quelconque des revendications 1 à 5, **caractérisé en ce que** le courant d'air de couloir supérieur (7) entier peut être amené au dispositif de filtration (9) de manière dirigeable en fonction de paramètres de fonctionnement prescriptibles, par exemple en fonction d'un mode de fonctionnement été ou hiver.

7. Procédé selon la revendication 6, **caractérisé en ce que** l'aspiration d'air de couloir supérieur est effectuée au-dessus de l'aspiration d'air de couloir inférieur lors de l'amenée du courant d'air supérieur (7) au dispositif de filtration (9).

8. Procédé selon l'une quelconque des revendications 1 à 7, **caractérisé en ce que** l'amenée d'air frais (6) est effectuée à l'intérieur du bâtiment (2) par un canal (11) étiré en longueur sur le plafond d'une pièce de bâtiment.

9. Procédé selon l'une quelconque des revendications 1 à 8, **caractérisé en ce que** l'aspiration du courant d'air de couloir supérieur (7) est effectuée sur le plafond d'une pièce du bâtiment.

10. Procédé selon l'une quelconque des revendications 1 à 9, **caractérisé en ce que** l'amenée d'air frais (6), l'aspiration de couloir inférieur et/ou l'aspiration de couloir supérieur est effectuée par respectivement une amenée ou une évacuation qui s'étend au moins sensiblement sur une étendue longitudinale et/ou transversale d'une pièce de bâtiment.

11. Procédé selon l'une quelconque des revendications 1 à 10, **caractérisé en ce que** l'amenée d'air frais (6) est effectuée centralement dans une pièce du bâtiment dans la zone d'un diffuseur d'air, duquel des courants d'air frais parviennent dans des espaces d'air de la pièce du bâtiment placés de part et d'autre de la zone centrale.

12. Procédé selon l'une quelconque des revendications 1 à 11, **caractérisé en ce que** l'amenée d'air de la zone de couloir inférieur (4) est effectuée par la zone de couloir supérieur (5) et l'évacuation de couloir inférieur est effectuée dans une zone centrale de la pièce du bâtiment.

13. Dispositif d'aération de bâtiments présentant une zone de couloir supérieur (5) et d'une zone de couloir inférieur (4), en particulier d'aménagements d'écurie, pour lesquels une cave à lisier (4.1) se trouve dans la zone de couloir inférieur (4.1), avec une amenée d'air frais (6) disposée en particulier dans la zone du plafond d'une pièce de bâtiment (2) et au moins un dispositif d'aspiration, sachant qu'un plancher en grilles est prévu entre la zone de couloir supérieur (4) et la zone de couloir inférieur (5), en particulier pour la réalisation du procédé selon l'une quelconque des revendications 1 à 13, sachant que l'air frais est amené par un long canal d'amenée d'air en forme de fente, **caractérisé en ce que** l'air frais est amené par un canal d'amenée d'air long en forme de fente, **en ce que** respectivement un dispositif d'aspiration avec des fentes étirées en longueur est prévu pour un courant d'air de couloir supérieur et un dispositif d'évacuation est prévu pour un courant d'air de couloir inférieur avec des fentes de courant d'air pour une aspiration parallèle à la surface de l'air hors de la pièce au-dessus du lisier.

14. Dispositif selon la revendication 13, **caractérisé en ce que** le dispositif pour l'aspiration d'air de couloir inférieur peut être relié à un dispositif de filtration.

15. Dispositif selon la revendication 14, **caractérisé en ce que** le dispositif pour l'aspiration de l'air de couloir supérieur peut être relié par un dispositif de commande ou de commutation au dispositif de filtration.

16. Dispositif selon l'une quelconque des revendications 13 à 15, **caractérisé en ce que** le dispositif présente des fentes de courant d'air étirées en longueur pour l'aspiration de l'air de couloir inférieur.

17. Dispositif selon l'une quelconque des revendications 13 à 16, **caractérisé en ce que** l'amenée d'air frais (6) présente un canal d'amenée d'air (11) qui est monté dans la zone de plafond d'une pièce de bâtiment (2) et introduit l'air frais (6) centralement par le haut à l'intérieur du bâtiment.

18. Dispositif selon l'une quelconque des revendications 13 à 17, **caractérisé en ce que** l'amenée d'air est effectuée dans la zone de couloir inférieur (5) par le plancher en grilles (3).

19. Dispositif selon l'une quelconque des revendications 13 à 18, **caractérisé en ce que** l'amenée d'air frais (6) peut être amenée à un canal de rebondissement dans la zone de sol de la pièce, d'où le courant d'air frais réfléchit dans d'autres zones de pièce de bâtiment.

20. Dispositif selon l'une quelconque des revendications 13 à 19, **caractérisé en ce que** le dispositif pour l'aspiration d'un courant d'air de couloir supérieur est prévu dans la zone de plafond d'un bâtiment.

21. Dispositif selon l'une quelconque des revendications 13 à 20, **caractérisé en ce que** les dispositifs pour l'aspiration du courant d'air de couloir supérieur et pour l'évacuation du courant d'air inférieur s'étendent avec leurs fentes le long d'une pièce de bâtiment.
